**Europäisches Patentamt**

**European Patent Office**

**Office européen des brevets**

(19)

(11) Numéro de publication : **0 191 161 B1**

(12) **FASCICULE DE BREVET EUROPÉEN**

(45) Date de publication du fascicule du brevet :
20.01.88

(51) Int. Cl.⁴ : **A 47 J 43/044**

(21) Numéro de dépôt : **85114976.5**

(22) Date de dépôt : **27.11.85**

(54) **Appareil électroménager pour préparations culinaires telles que sauces ou liaisons pâtissières.**

(30) Priorité : **24.01.85 FR 8500981**

(43) Date de publication de la demande :
**20.08.86 Bulletin 86/34**

(45) Mention de la délivrance du brevet :
**20.01.88 Bulletin 88/03**

(84) Etats contractants désignés :
**AT BE CH DE IT LI NL SE**

(56) Documents cités :
**FR-A- 1 260 862**
**FR-A- 2 417 965**
**GB-A- 861 915**
**GB-A- 875 729**
**US-A- 1 781 381**
**US-A- 2 003 829**
**US-A- 2 032 571**

(73) Titulaire : **MOULINEX**
**7 à 15, rue Jules-Ferry**
**F-93171 Bagnolet Cédex (FR)**

(72) Inventeur : **Weiss, Roger**
**Société Moulinex 11, rue Jules-Ferry**
**F-93170 Bagnolet (FR)**

(74) Mandataire : **May, Hans Ulrich, Dr.**
**Thierschstrasse 27**
**D-8000 München 22 (DE)**

## Description

L'invention se rapporte aux appareils électroménagers pour préparations culinaires telles que sauces ou liaisons pâtissières.

Elle concerne, plus précisément, les appareils électroménagers qui comportent un socle de réception d'un bol de travail, un outil rotatif tel qu'un fouet ou une palette pénétrant dans ce bol, une colonne s'élevant du socle et portant en son sommet un bras qui s'étend horizontalement au-dessus du bol et qui renferme un dispositif d'entraînement comprenant une roue dentée venant en prise avec un pignon d'entraînement de l'arbre de l'outil. Un tel appareil électroménager est décrit dans le FR-A-2 417 965.

Dans les appareils connus de ce genre, le bras est généralement monté amovible ou tout au moins pivotant autour d'un axe horizontal sur la colonne, ceci afin de permettre soit l'enlèvement du bol de son socle, soit l'échange de l'outil de travail, par exemple en vue d'une nouvelle phase opératoire.

L'invention a notamment pour but, par souci d'économie, de supprimer la nécessité du montage amovible ou pivotant du bras sur la colonne, et par conséquent de permettre un montage rigide de ce bras au sommet de la colonne.

Dans un appareil selon l'invention, le pignon d'entraînement de l'arbre de l'outil est solidaire de cet arbre, et l'ensemble ainsi formé par ce pignon et cet outil est monté amovible sur un siège qui est ménagé en bout du bras et dans lequel est ménagé un logement communiquant avec l'extérieur par une ouverture laissant passer ledit pignon et ledit arbre en vue de la mise en place ou de l'enlèvement dudit ensemble, cette ouverture s'étendant en particulier sur la face inférieure du bras ainsi que sur la surface latérale externe de ce bras.

Grâce à cette disposition on peut, même si le bras est monté fixe sur la colonne, procéder facilement à l'enlèvement de l'outil, ceci avec ou sans enlèvement simultané du bol.

Des modes particuliers de réalisation de l'invention selon la revendication 1 font l'objet des revendications dépendantes 2 à 10.

Les caractéristiques et avantages de l'invention ressortiront d'ailleurs de la description qui va suivre à titre d'exemple, en référence aux dessins annexés, dans lesquels :

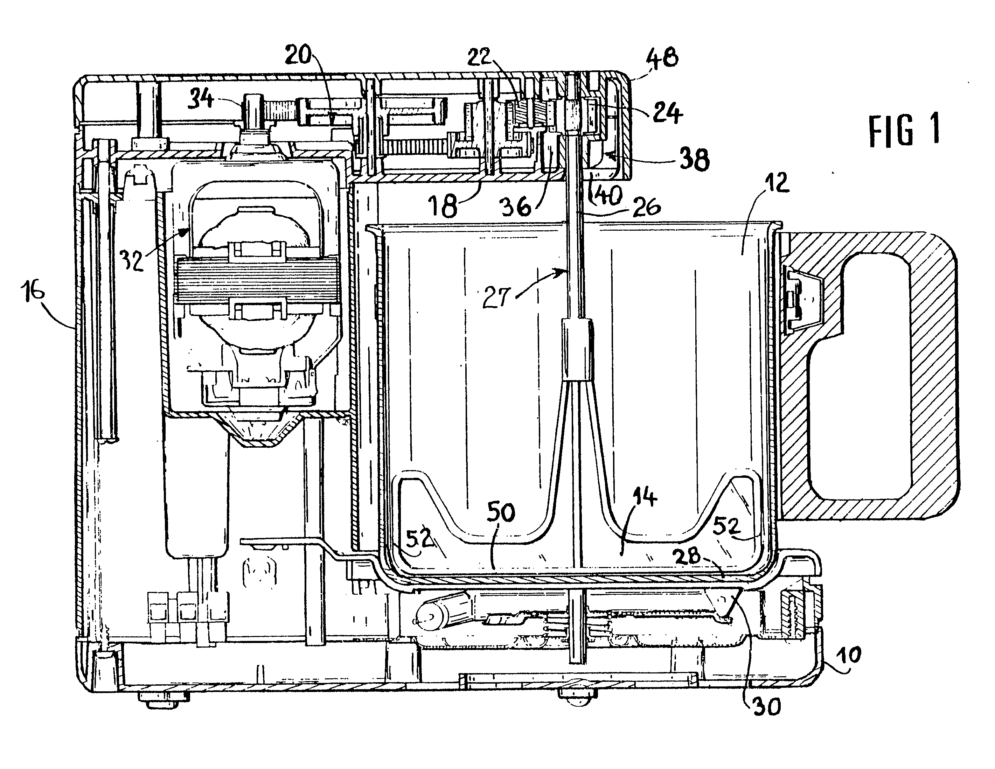

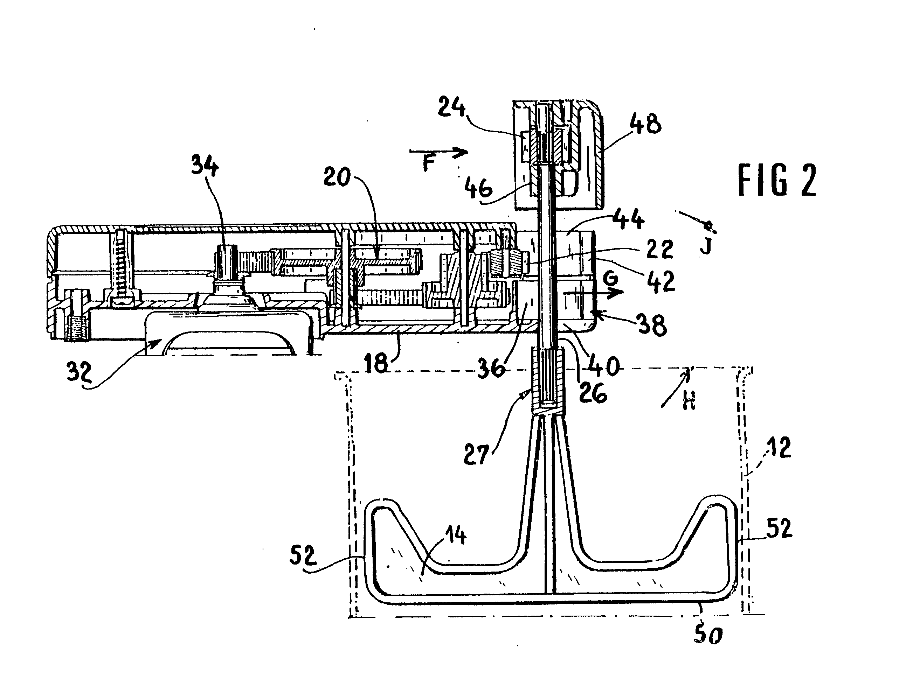

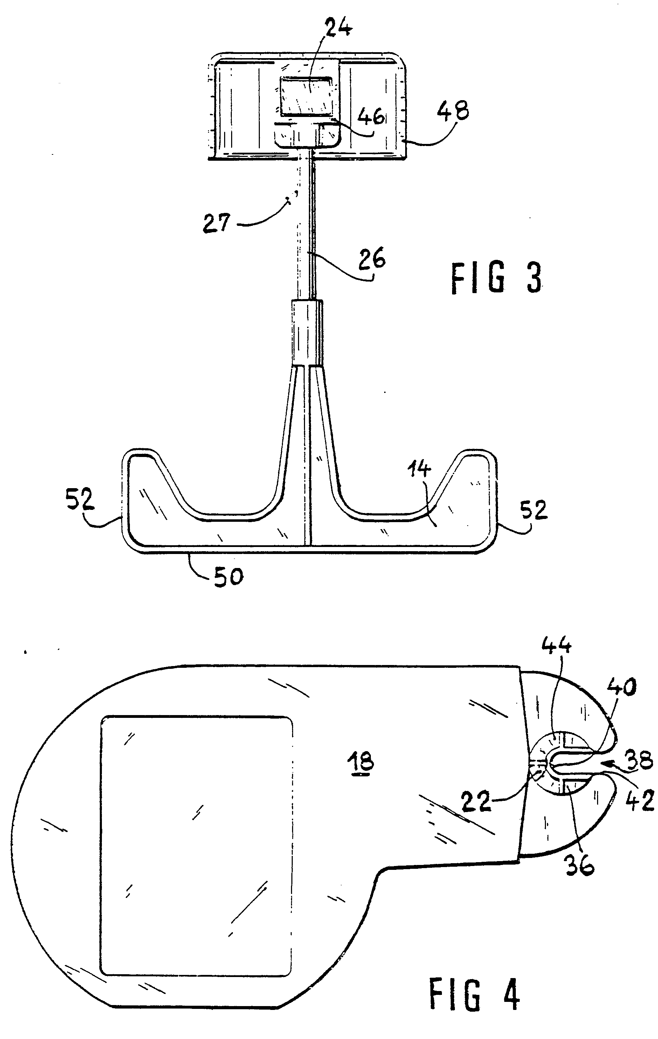

la figure 1 est une coupe verticale longitudinale d'un appareil de préparation culinaire conforme à l'invention, avec l'outil mis en place en position de travail sur l'appareil ; la figure 2 est une coupe verticale partielle du même appareil, avec l'outil en une position soulevée au cours de l'enlèvement de cet outil ou au cours de sa mise en place ; la figure 3 représente en élévation l'ensemble formé par l'outil et son pignon d'entraînement, vu selon la flèche F de la figure 2 ; la figure 4 est une vue de dessus du bras sans l'outil.

L'appareil représenté est destiné aux préparations culinaires telles que les sauces ou les liaisons pâtissières. Il comporte : un socle 10 de réception d'un bol de travail 12 ; un outil rotatif tel qu'une palette 14 pénétrant dans ce bol ; une colonne 16 s'élevant du socle 10 et portant en son sommet un bras 18 qui s'étend horizontalement au-dessus du bol 12 et qui renferme un dispositif d'entraînement 20 constitué par un réducteur de vitesse comprenant deux étages à courroie et une roue dentée de sortie 22 qui vient en prise avec un pignon 24 d'entraînement de l'arbre 26 de l'outil 14. Le bol 12 est de forme générale cylindrique, et l'arbre 26 de l'outil 14, pour la position de travail de la figure 1, coïncide avec l'axe vertical de ce bol. La palette constituant cet outil est ainsi disposée diamétralement au bol.

Pour assurer le réchauffage ou la cuisson de la préparation culinaire contenue dans le bol 12, le socle 10 comporte des moyens de chauffage du fond 28 de ce bol, lesquels peuvent être constitués par une résistance électrique 30.

Le bras 18 est monté fixe au sommet de la colonne 16. Cette colonne renferme un moteur électrique 32 dont l'arbre de sortie 34 est en prise avec le dispositif d'entraînement 20 interne au bras 18.

Comme on le voit bien, en particulier, sur la figure 2, le pignon 24 d'entraînement de l'arbre 26 de l'outil est solidaire de cet arbre, et l'ensemble 27 ainsi formé par le pignon 24 et l'outil 14 est monté amovible sur un siège qui est ménagé en bout du bras 18 et dans lequel est ménagé un logement 36 communiquant avec l'extérieur par une ouverture 38 laissant passer le pignon 24 et l'arbre 26 en vue de la mise en place ou de l'enlèvement dudit ensemble 27 sur ledit siège.

L'ouverture 38 part de la face inférieure du bras 18, et s'étend sur la surface latérale externe de l'extrémité de ce bras, ainsi que sur la face supérieure de ce bras. Cette ouverture comprend ainsi une zone inférieure étroite 40 permettant le passage de l'arbre 26 vers le bol 12, une zone latérale étroite 42 permettant le passage de l'arbre 26 lors d'un mouvement de translation latérale en vue de l'enlèvement de l'outil 14 (flèche G de la figure 2) ou bien de sa mise en place, et une zone supérieure large 44 permettant le passage du pignon 24 de haut en bas ou de bas en haut lors de ladite mise en place ou dudit enlèvement.

Le pignon 24 et l'arbre 26 sont montés rotatifs dans un palier semi-cylindrique 46 monté lui-même coulissant verticalement dans un guide qui est ménagé dans le logement 36 et qui est constitué par la paroi interne de la zone supérieure large 44 de l'ouverture 38. Le palier 46 est solidaire d'un capot 48 qui s'emboîte de haut en bas sur l'extrémité du bras 18.

Comme on le voit sur la figure 1, pour la position de mise en place de l'outil sur l'appareil, le bord inférieur 50 de la palette 14 s'étend au voisinage immédiat du fond 28 du bol 12, et les bords latéraux 52 de cette palette s'étendent, quant à eux, au voisinage immédiat de la paroi interne cylindrique du bol.

Si, lorsque l'appareil est dans la position de fonctionnement de la figure 1, l'usager désire enlever l'outil de cet appareil, il devra d'abord, en saisissant le capot 48, soulever l'ensemble 27 pour l'amener en la position de la figure 2 ; puis il fera passer l'arbre 26 à l'extérieur du bras 18 par la région ouverte 42 de ce bras (flèche G) ; il extraira ensuite facilement la palette du bol (flèche H), ceci après l'avoir fait tourner au besoin d'un quart de tour autour de son axe à partir de la position représentée, et après avoir fait légèrement basculer l'ensemble 27 (flèche J).

Bien entendu, après un simple soulèvement de l'ensemble 27 tel qu'illustré à la figure 2, l'usager peut aussi, s'il le désire, extraire globalement le bol et l'outil après un léger soulèvement du bol suivi d'une translation horizontale suivant la flèche G.

La remise en place du bol et de l'outil sur l'appareil s'effectuera ensuite en exécutant en sens inverse les mouvements décrits ci-dessus. Alors le dernier de ces mouvements, c'est-à-dire l'abaissement de l'ensemble 27 vers le fond du bol, s'accompagnera de l'emboîtement du capot 48 sur l'extrémité du bras 18, et de l'engrènement simultané du pignon 24 avec la roue dentée 22.

**Revendications**

1. Appareil électroménager comportant un socle (10) de réception d'un bol de travail (12), un outil rotatif (14) tel qu'un fouet ou une palette pénétrant dans ce bol, une colonne (16) s'élevant dudit socle (10) et portant en son sommet un bras (18) qui s'étend horizontalement au-dessus du bol (12) et qui renferme un dispositif d'entraînement (20) comprenant une roue dentée (22) venant en prise avec un pignon (24) d'entraînement de l'arbre (26) de l'outil (14), caractérisé en ce que ledit pignon (24) est solidaire de l'arbre (26) de l'outil (14), et l'ensemble (27) ainsi formé par ce pignon (24) et cet outil (14) est monté amovible sur un siège qui est ménagé en bout du bras (18) et dans lequel est ménagé un logement (36) communiquant avec l'extérieur par une ouverture (38) laissant passer ledit pignon (24) et ledit arbre (26) en vue de la mise en place ou de l'enlèvement dudit ensemble (27) sur ledit siège, cette ouverture (38) s'étendant en particulier sur la face inférieure du bras (18) ainsi que sur la surface latérale externe de ce bras.

2. Appareil électroménager selon la revendication 1, caractérisé en ce que l'ouverture (38) de communication du logement (36) avec l'extérieur s'étend en outre sur la face supérieure du bras (18), et comprend ainsi une zone inférieure (40) permettant le passage de l'arbre (26) vers le bol (12), une zone latérale (42) pour le passage de l'arbre (26) lors d'un mouvement de translation latérale en vue de la mise en place ou de l'enlèvement de l'outil (14), et une zone supérieure (44) pour le passage du pignon (24) de haut en bas ou de bas en haut lors de ladite mise en place ou dudit enlèvement.

3. Appareil électroménager selon la revendication 2, caractérisé en ce que le pignon (24) et l'arbre (26) sont montés rotatifs dans un palier (46) qui est lui-même monté coulissant verticalement dans un guide ménagé dans le logement (36).

4. Appareil électroménager selon la revendication 3, caractérisé en ce que le palier (46) est solidaire d'un capot (48) qui s'emboîte de haut en bas sur l'extrémité du bras (18).

5. Appareil électroménager selon l'une quelconque des revendications précédentes, caractérisé en ce que le socle comporte des moyens (30) de chauffage du fond (28) du bol (12).

6. Appareil électroménager selon la revendication 5, caractérisé en ce que, le bol (12) étant de forme générale cylindrique, l'arbre (26) de l'outil (14), pour la position de mise en place, coïncide avec l'axe vertical du bol (12).

7. Appareil électroménager selon les revendications 5 et 6, caractérisé en ce que, pour la position de mise en place de l'outil (14), le bord inférieur (50) de cet outil s'étend au voisinage immédiat du fond (28) du bol (12).

8. Appareil électroménager selon la revendication 7, caractérisé en ce que, pour la position de mise en place de l'outil (14), au moins un bord latéral (52) de cet outil s'étend au voisinage immédiat de la paroi interne cylindrique du bol (12).

9. Appareil électroménager selon l'une quelconque des revendications précédentes, caractérisé en ce que le bras (18) est monté fixe sur la colonne (16).

10. Appareil électroménager selon l'une quelconque des revendications précédentes, caractérisé en ce que la colonne (16) renferme un moteur électrique (32) dont l'arbre de sortie (34) est en prise avec le dispositif d'entraînement (20) interne au bras (18).

**Claims**

1. Electric household appliance comprising a base (10) for accommodating a work bowl (12), a rotatable tool (14) such as a stirring arm or a blade agitator extending into said work bowl, a column (16) extending upwardly from said base (10) and carrying at its end an arm (18) which extends horizontally above the work bowl (12) and encloses a drive mechanism (20) including a gear (22) for meshing with a drive pinion (24) of the shaft (26) of said tool (14), characterised in that the drive pinion (24) is integral with the shaft (26) and the assembly (27) thus formed by said pinion (24) and said tool (14) is removably retained on a seat which is formed on the end of the arm (18) and has a receiving space (36) defined therein which communicates with the environment via an opening (38), said opening permitting the pinion (24) and the shaft (26) to be passed therethrough for inserting the assembly (27) on said seat or for removal thereof from the seat, wherein said opening (38) especially extends across the lower surface of the arm (18) and the outer side surface of said arm.

2. Electric household appliance as claimed in claim 1, characterised in that the opening (38), which communicates the receiving space (36) with the environment, additionally extends across the upper surface of the arm (18) to thereby comprise a lower area (40) which allows passage of the shaft (26) to the work bowl (12), a lateral area (42) for passage of the shaft (26) therethrough upon a lateral displacing movement for inserting or removing the tool (14), and an upper area (44) for passage of the pinion (24) therethrough either from top to bottom or from bottom to top during the mentioned inserting or removing operation.

3. Electric household appliance as claimed in claim 2, characterised in that the pinion (24) and the shaft (26) are rotatably supported in a bearing (46) which in turn is retained for vertical movement in guide means formed in the receiving space (36).

4. Electric household appliance as claimed in claim 3, characterised in that the bearing (46) is fixedly connected to a cap (48) adapted to be pushed from above over the end of the arm (18).

5. Electric household appliance as claimed in any one of the preceding claims, characterised in that the base comprises heating means (30) for heating the bottom (28) of the work bowl (12).

6. Electric household appliance as claimed in claim 5, characterised in that, when the work bowl (12) is of overall cylindrical shape, the shaft (26) of the tool (14) in the inserted position coincides with the vertical axis of the work bowl (12).

7. Electric household appliance as claimed in claims 5 and 6, characterised in that for the inserted position (operative position) of the tool (14) the bottom edge (50) of said tool extends in direct proximity to the bottom (28) of the work bowl (12).

8. Electric household appliance as claimed in claim 7, characterised in that in the inserted position (operative position) of the tool (14) at least one side edge (52) of said tool extends in direct proximity to the cylindrical inner wall of the work bowl (12).

9. Electric household appliance as claimed in any one of the preceding claims, characterised in that the arm (18) is securely mounted on the column (16).

10. Electric household appliance as claimed in any one of the preceding claims, characterised in that the column (16) surrounds an electric motor (32) the output shaft (34) of which is in engagement with the drive mechanism (20) disposed within the arm (18).

**Patentansprüche**

1. Elektrisches Haushaltsgerät mit einem Ständer (10) zur Aufnahme einer Arbeitsschüssel (12), einem in diese Arbeitsschüssel reichenden drehbaren Werkzeug (14), wie einem Rührarm oder Flügelrührer, einer Säule (16), die sich vom Ständer (10) nach oben erstreckt und an ihrer Spitze einen Arm (18) trägt, der sich waagerecht oberhalb der Arbeitsschüssel (12) erstreckt und eine Antriebsvorrichtung (20) umschließt, die ein Zahnrad (22) aufweist, das mit einem Antriebsritzel (24) der Welle (26) des Werkzeugs (14) in Eingriff kommt, dadurch gekennzeichnet, daß das Antriebsritzel (24) einstückig mit der Welle (26) des Werkzeugs (14) ist und die so von diesem Ritzel (24) und diesem Werkzeug (14) gebildete Anordnung (27) abnehmbar auf einem Sitz gehalten ist, der am Ende des Arms (18) ausgebildet ist und in dem ein Aufnahmeraum (36) ausgebildet ist, der mit der Umgebung durch eine Öffnung (38) in Verbindung steht, welche das Ritzel (24) und die Welle (26) zum Einsetzen der Anordnung (27) auf den Sitz oder zu deren Abnahme vom Sitz hindurchtreten läßt, wobei sich diese Öffnung (38) insbesondere über die untere Fläche des Arms (18) sowie die äußere seitliche Oberfläche dieses Arms erstreckt.

2. Elektrisches Haushaltsgerät nach Anspruch 1, dadurch gekennzeichnet, daß die Öffnung (38), welche die Verbindung vom Aufnahmeraum (36) zur Umgebung bildet, sich außerdem über die obere Fläche des Arms (18) erstreckt und so einen unteren Bereich (40), der den Durchtritt der Welle (26) zur Arbeitsschüssel (12) ermöglicht, einen Seitenbereich (42) für den Durchtritt der Welle (26) bei einer seitlichen Verschiebungsbewegung zum Einsetzen oder Herausnehmen des Werkzeugs (14) und einen oberen Bereich (44) für den Durchtritt des Ritzels (24) von oben nach unten oder von unten nach oben beim erwähnten Einsetzen oder Herausnehmen aufweist.

3. Elektrisches Haushaltsgerät nach Anspruch 2, dadurch gekennzeichnet, daß das Ritzel (24) und die Welle (26) drehbar in einem Lager (46) gehalten sind, das selbst in einer im Aufnahmeraum (36) ausgebildeten Führung senkrecht verschiebbar gehalten ist.

4. Elektrisches Haushaltsgerät nach Anspruch 3, dadurch gekennzeichnet, daß das Lager (46) fest mit einer Kappe (48) verbunden ist, die sich von oben nach unten über das Ende des Arms (18) schiebt.

5. Elektrisches Haushaltsgerät nach einem der vorangehenden Ansprüche, dadurch gekennzeichnet, daß der Ständer eine Heizvorrichtung (30) für den Boden (28) der Arbeitsschüssel (12) aufweist.

6. Elektrisches Haushaltsgerät nach Anspruch 5, dadurch gekennzeichnet, daß bei einer im ganzen zylindrisch geformten Arbeitsschüssel (12) die Welle (26) des Werkzeugs (14) in der eingesetzten Stellung mit der senkrechten Achse der Arbeitsschüssel (12) zusammenfällt.

7. Elektrisches Haushaltsgerät nach den Ansprüchen 5 und 6, dadurch gekennzeichnet, daß für die eingesetzte Stellung (Arbeitsstellung) des Werkzeugs (14) die Unterkante (50) dieses Werkzeugs sich in der unmittelbaren Nähe des Bodens (28) der Arbeitsschüssel (12) erstreckt.

8. Elektrisches Haushaltsgerät nach Anspruch 7, dadurch gekennzeichnet, daß sich in der eingesetzten Stellung (Arbeitsstellung) des Werkzeugs (14) mindestens eine Seitenkante (52) dieses Werkzeugs in der unmittelbaren Nähe der zylindrischen Innenwand der Arbeitsschüssel (12) erstreckt.

9. Elektrisches Haushaltsgerät nach einem der vorangehenden Ansprüche, dadurch gekennzeichnet, daß der Arm (18) fest an der Säule (16) montiert ist.

10. Elektrisches Haushaltsgerät nach einem der vorangehenden Ansprüche, dadurch gekennzeichnet, daß die Säule (16) einen Elektromotor (32) umschließt, dessen Abtriebswelle (34) in Eingriff mit der innerhalb des Arms (18) angeordneten Antriebsvorrichtung (20) ist.

**FIG 1**

0 191 161

FIG 2

0 191 161

**FIG 3**

**FIG 4**